# EUROPEAN PATENT SPECIFICATION

(11) **EP 2 307 799 B1**
(45) Date of publication and mention of the grant of the patent: **30.03.2016**
(21) Application number: 09761857.3
(22) Date of filing: 11.06.2009
(51) Int. Cl.: F23C 10/24

(54) **STEERING FUNNEL FOR BED MATERIAL IN FLUIDIZED BED BOILER, FLUIDIZED BED BOILER AND METHOD IN FLUIDIZED BED BOILER**
LENKTRICHTER FÜR BETTMATERIAL IN EINEM WIRBELBETTKESSEL, WIRBELBETTKESSEL UND WIRBELBETTKESSELVERFAHREN
ENTONNOIR DE GUIDAGE POUR MATÉRIAU DE LIT DANS UNE CHAUDIÈRE À LIT FLUIDISÉ, CHAUDIÈRE À LIT FLUIDISÉ ET PROCÉDÉ RELATIF À UNE CHAUDIÈRE À LIT FLUIDISÉ

(30) Priority: 11.06.2008 FI 20085573
(43) Date of publication of application: 13.04.2011
(73) Proprietor: Yit Teollisuus- JA Verkkopalvelut OY, 78201 Varkaus (FI)
(72) Inventor: PAKARINEN, Juha, FI-78400 Varkaus (FI)
(74) Representative: Turun Patenttitoimisto Oy
(86) International application number: PCT/FI2009/050498
(87) International publication number: WO 2009/150302

(56) References cited:
- DE-U- 1 831 982
- FR-A1- 2 763 577
- US-A- 2 812 592
- US-A- 4 805 405

## Description

### TECHNICAL FIELD OF THE INVENTION

The invention relates to a fluidized bed boiler and a method in a fluidized bed boiler in accordance with the preambles of the independent claims presented below. The invention especially relates to a new method for guiding flows of material to be removed from a fluidized bed boiler.

### TECHNICAL BACKGROUND

An ordinary fluidized bed boiler essentially comprises a furnace limited by vertical walls, a bottom and a roof. A fluidized bed formed of solid matter particles like sand is maintained in the furnace. A typical fluidized bed boiler comprises feeding means for feeding fuel, fluidized bed material and air to the furnace. Flue gases are led away from the furnace to an exhaust duct for flue gases. At the bottom of the furnace there is a grate in which feeding elements of air, like air nozzles, are typically arranged. Air needed for burning of fuel and for fluidization of bed material is fed from air nozzles to the bottom of the furnace. Fluidization air is typically used as primary air of combustion process. On the grate are also arranged elements like openings or gaps for removing solid matter, i.e. bed material, ash, and impurities among them, to underside of the grate. Below the openings or gaps of the grate is typically arranged one or more channels or pockets, which are in this text called funnels, along which material to be removed from the furnace is led in a controlled manner from the furnace to the underside of the boiler. There usually are shutters on the bottom end of the funnels, by means of which the volume of the material to be removed from the furnace is controlled. Material to be removed from the funnels is usually led to a conveyor and onwards to further processing. Material is removed from the funnels at the need, typically periodically, for example a few times an hour in a normal operating situation.

On the underside of the grate there can be a windbox, inside which said funnels are at least partially arranged. Fluidization air is led to the windbox, i.e. around funnels, and fluidization air is led from the windbox to the air feeding elements above of the grate. Typically air is heated in the windbox with the heat of bed material streaming downwards in the funnels. At the same time, bed material in the funnels is cooling.

US 4805405 and US 2812592 disclose known structures of fluidized bed boilers.

One problem in a fluidized bed boiler is a high proportion of incombustible particles contained in some fuels, such as construction waste or logging waste, such as stumps: metals, stones, concrete, etc., that accumulate on the bottom of the furnace and interfere fluidization of sand. Above-mentioned problem has been solved by designing the bottom of the furnace to better remove bed material, for example by enlarging discharge openings of material that lead through the grate. In this manner, also impurities at the bottom of the furnace are removed from the furnace with the bed material.

Due to the downwards tapering form of one or more funnels below the grate, the flow in the funnel is not always steady. A so-called core flow usually tends to develop at the discharge opening in the bottom of the funnel or to the centre of the funnel. This means that material normally flows faster downwards at the centre of the funnel than at the edges of the funnel. Because in fluidized bed boilers the cross-sectional area of the bottom of the furnace, i.e. the bed, is typically considerably larger than the area of discharge openings at the bottom of the funnel or funnels, material is removed irregularly from the furnace. Sometimes material is removed in fluidized bed boilers only from said core flow area of the bottom of the furnace.

As a result of irregular discharge of material, unburnt material accumulates to piles in the bottom of the bed hindering fluidization, and it may cause a partial or total melting of bed material.

Because of an irregular flow of material, a part of the material may even be permanently stationary or move very slowly on the edges of the funnels. This disturbs heat transfer between air flowing in the windbox and bed material. In this case, the material to be removed from the funnels, having flown in the core flow, does not have enough time to cool down as desired in the funnel. On the other hand, air blown to the furnace is not pre-heated in a desired manner in the windbox.

DE 1831982 U and FR 2763577 disclose storage silos for bulk material mixtures or seed mixtures, the silos comprising structures for controlling the flow of the material in the silos.

### OBJECT AND BRIEF DESCRIPTION OF THE INVENTION

It is an object of the present invention to reduce or even eliminate the above-mentioned problems appearing in prior art.

The present invention has especially an object of providing a solution for achieving a discharge of material that is as regular as possible from the whole bottom area of the fluidized bed boiler.

An object of the present invention is to reduce so-called core flow which tends to develop to the centre of a steering funnel for bed material in a fluidized bed boiler.

An object of the present invention is to intensify the functioning of a fluidized bed boiler.

An object of the present invention is to intensify heat transfer between air of the windbox and material to be removed from a fluidized bed boiler.

Among others, in order to realize the objects mentioned above, the invention is characterized by what is presented in the characterizing parts of the enclosed independent claims.

The embodiment examples and advantages mentioned in this text relate, where applicable, as well to a steering funnel, a fluidized bed boiler, a method, an inner funnel as to uses, even though it is not always specifically mentioned.

The embodiments of the invention are suitable to be used in connection with boilers utilizing different fluidization techniques. In this text, the term fluidized bed boiler is used for all different boilers utilizing fluidized bed technique. Fluidized bed boilers are for example circulating fluidized bed boilers, i.e. circulating bed boilers (CFB boilers) or bubbling fluidized bed boilers, i.e. bubbling bed boilers (BFB boilers).

A typical fluidized bed boiler according to the invention is defined in claim 1. A typical method in a fluidized bed boiler according to the invention is defined in claim 8.

A typical fluidized bed boiler according to the invention comprises a furnace limited by walls, a grate and a roof. Below the grate in the connection with the furnace is arranged a steering funnel according to the invention, in which bed material removed from the furnace is led downwards. In this connection, for the sake of simplicity, only bed material is referred to, even though it is obvious that simultaneously also impurities are removed from the furnace.

A typical steering funnel is mainly downwards tapering on its horizontal cross-section. This means that the upper edge of the funnel is larger by its surface area than its lower edge. In the steering funnel there may be vertical or even partly downwards expanding sections. The upper edge of the steering funnel comprises an inlet connection through which the bed material is led into the steering funnel. The lower edge comprises an outlet connection through which bed material is removed from the steering funnel. The outlet connection usually comprises a shutter, like a gate valve, by means of which a flow of the material to be removed from the steering funnel can be guided. In the typical steering funnel of the invention, bed material and elements flowing with it are thus are led along their path between an inlet and outlet connection. According to the invention, into the steering funnel, between its upper and lower edge, are arranged guide plates, which are substantially divergent from the surface of the steering funnel, for guiding the flow of the bed material inside the steering funnel. It is an aim of the guide plates to level the flow of material inside the steering funnel for example by preventing the development of a core flow between an inlet and outlet connection.

According to the invention the guide plates are arranged so that the flow of bed material is maintained on mainly the whole cross-sectional area of the steering funnel. Thus, it is not an aim to totally prevent or stop the vertical flow of the bed material, but the flow is guided. The flow, which takes place on as large area as possible of the steering funnel, means that at least not big air pockets, i.e. points where there is no bed material, are formed to the steering funnel, nor at least large points, where bed material does not flow, are formed. This kind of air pockets or points without a flow may in some embodiments of the solution according to the invention cover for example less than 30 %, less than 20 %, less than 10 %, less than 5 %, less than 3 %, less than 2 % or less than 1 % of horizontal cross-sectional area in the steering funnel when bed material is removed in a normal operating situation of the invention.

In a typical fluidized bed boiler of the invention guide plates are arranged inside the steering funnel as a rectangular inner funnel which has inclined side walls, thus the funnel being mainly downwards tapering on its horizontal cross-section to permit a flow of bed material on substantially whole cross-sectional area of the steering funnel whereby
- the upper edge of the inner funnel comprises an inlet opening for material and the lower edge comprises an outlet opening,
- the inlet opening of the inner funnel is arranged approximately to the same height as the inlet opening of the steering funnel,
- the outlet opening of the inner funnel opens approximately to the middle of the height of the steering funnel, a little above the midpoint,
- the inner funnel is arranged to throttle a material flow at the centre of the steering funnel, i.e. at the outlet opening, thus creating a condition for easier flowing of material between the inner funnel and the steering funnel,
- to the outer edges of the inner funnel are attached extra guide plates, arranged to throttle the flow of material outside the inner funnel from angles of the walls) towards the centre of the walls.

A typical method in a fluidized bed boiler according to the invention comprises:
- transferring material from a bottom of a furnace of a fluidized bed boiler of a steering funnel into a steering funnel below the furnace, through an upper edge of the steering funnel,
- guiding material downwards inside the steering funnel,
- removing material from a lower edge of the steering funnel,
- guiding a flow of material inside the steering funnel by means of guide plates being between its upper and lower edge, which guide plates are substantially divergent from a surface of the steering funnel, thus hindering development of a core flow inside the steering funnel,
- arranging the guide plates inside the steering funnel as a rectangular inner funnel (15) having inclined side walls, thus the funnel being downwards tapering on its horizontal cross-section,
- guiding the flow of material downwards on substantially whole cross-sectional area of the steering funnel,
- arranging the upper edge of the inner funnel to comprise an inlet opening for material and the lower edge to comprise an outlet opening,
- arranging the inlet opening of the inner funnel approximately to the same height as the inlet opening of the steering funnel,
- arranging the outlet opening of the inner funnel to open approximately to the middle of the height of the steering funnel, a little above the midpoint,
- throttling a material flow at the centre of the steering funnel, i.e. at the outlet opening with the inner funnel thus creating a condition for easier flowing of material between the inner funnel and the steering funnel,
- attaching extra guide plates to the outer edges of the inner funnel, thereby throttling the flow of material outside the inner funnel from angles of the walls towards the centre of the walls.

In an embodiment of the invention guide plates slow down a downwards directed flow of bed material above the outlet connection of the steering funnel. Thus, the guide plates for example throttle the flow of the bed material at the centre of the steering funnel and facilitate flowing of the material near the edges of the steering funnel.

In an embodiment of the invention a free vertical path leads through the steering funnel from an inlet connection of the upper edge to an outlet connection of the lower edge in the steering funnel. In other words, if bed material has completely been removed from this kind of steering funnel, there is a visual contact along a vertical line from the inlet connection of the upper edge to the outlet connection of the lower edge of the steering funnel. Bed material can thus flow at least in theory also along a straight path through the steering funnel and between guide plates.

In an embodiment of the invention, below the grate of a fluidized bed boiler is arranged a windbox through which and thence onwards air needed for burning and fluidization of bed material is led through a grate to a furnace. Thus, a steering funnel according to the invention is typically arranged mainly inside the windbox of a fluidized bed boiler. A steady flow of bed material to be removed from the furnace on the whole cross-section of the steering funnel produces a more regular retention of material in the steering funnel as compared with material flowing in a core flow according to prior art. The stabilization of the retention time results in more effective and more regular cooling of the material, which makes its later processing in conveyors and silos easier.

Now it has now been surprisingly found that by means of simple guide plates turning the flow and arranged inside the steering funnel, the removal of the material from the bottom of the fluidized bed boiler can be efficiently evened out.

Furthermore, by means of the invention heat transfer between the air flowing in the windbox and the material travelling in the steering funnel can be simply increased.

In an embodiment of the invention, guide plates comprise several separate plates and bed material can flow in the spaces between the plates. Guide plates can be placed on various heights in the steering funnel or mainly to the same height with each other. Guide plates can be of different sizes or they can be equal in size with each other.

According to the invention, guide plates are formed as an inner funnel into which leads an inlet opening and from which leads an outlet opening. Between the inlet and outlet opening, there are walls of the inner funnel. In an embodiment of the invention the walls are at least mainly closed so that bed material can reach inside the funnel only from the inlet opening and away from the funnel only from the outlet opening. In an embodiment of the invention, openings from which bed material can flow inside the funnel or out of it are formed on the walls.

According to the invention, guide plates are formed inside the steering funnel as a substantially downwards tapering inner funnel. The inner funnel efficiently throttles the material flow leading through it and prevents the formation of a core flow by it.

The inner funnel has typically a conical shape, for example a truncated rectangular pyramid shape. Its size is adjusted to be suitable for each steering funnel. A minimum inner diameter of the inner funnel, i.e. a minimum opening from which the material must flow when it travels through it, can be for example less than 2000 mm, 200 to 2000 mm, 200 to 1000 mm, 250 to 500 mm or 300 to 500 mm. One steering funnel can have one or more inner funnels, for example 1, 2, 3, 4 or 5.

In an embodiment of the invention, a part of bed material is led along an inner path, i.e. through an inner funnel. Another part of the material is led along an outer path, i.e. between the inner funnel and the steering funnel. When the inner funnel is slowing down the flow inside it, material on the outer path can flow better.

In an embodiment of the invention guide plates, for example an inner funnel, are arranged to the centre part of a steering funnel. This is usually most efficient because usually the core flow of bed material tends to develop right to the centre of the steering funnel. For example, the inner funnel can be arranged straight above the outlet connection of the steering funnel. In an embodiment, the inner funnel is arranged symmetrically in relation to the steering funnel, when considering the horizontal cross-section of the steering funnel.

In an embodiment of the invention, an inner funnel is at a distance from all inner walls of the steering funnel. In this manner, bed material can be led from around the inner funnel on substantially all its sides.

In an embodiment of the invention, a steering funnel and an inner funnel have substantially the same or congruent shape in their horizontal cross-section. For example, both may have a cross-section with the shape of squares, circles or rectangles the length ratios of the sides of which are equal.

In an embodiment of the invention, a steering funnel and an inner funnel have substantially different shape in their horizontal cross-section. For example, one may have a circular horizontal cross-section and the other may be angular.

In an embodiment of the invention, guide plates are arranged between a steering funnel and an inner funnel. In this manner, a flow of bed material can be guided more efficiently also in the vicinity of the walls of the steering funnel.

In an embodiment of the invention, a steering funnel has a rectangular horizontal cross-section. Then, in an embodiment the aim is to intensify a flow of the material in the vicinity of the angles of the rectangle. This can be done, for example, by placing extra guide plates which turn the flow, between the inner funnel and the steering funnel, into the area between the angles of the rectangle. In an embodiment of the invention the inner funnel and said extra guide plates are one and the same piece. Then they can be for example retrofitted as one piece in an already existing steering funnel.

Some embodiments also relate to an inner funnel as such, which funnel is intended inside a steering funnel in a fluidized bed boiler, as well as to the use of downwards tapering funnel and guide plates inside a steering funnel for preventing a core flow of bed material inside a steering funnel.

### BRIEF DESCRIPTION OF THE FIGURES

The invention is described in more detail below with reference to the enclosed schematic drawing, in which
- Figure 1: shows a fluidized bed boiler according to the invention,
- Figure 2: shows a side-view of an inner funnel in a steering funnel according to the invention, and
- Figure 3: shows the inner funnel and the steering funnel of Figure 2 as seen from above.

### DETAILED DESCRIPTION OF THE EXAMPLES OF THE FIGURES

For the sake of clarity, the same reference numbers are used for corresponding parts in different embodiments.

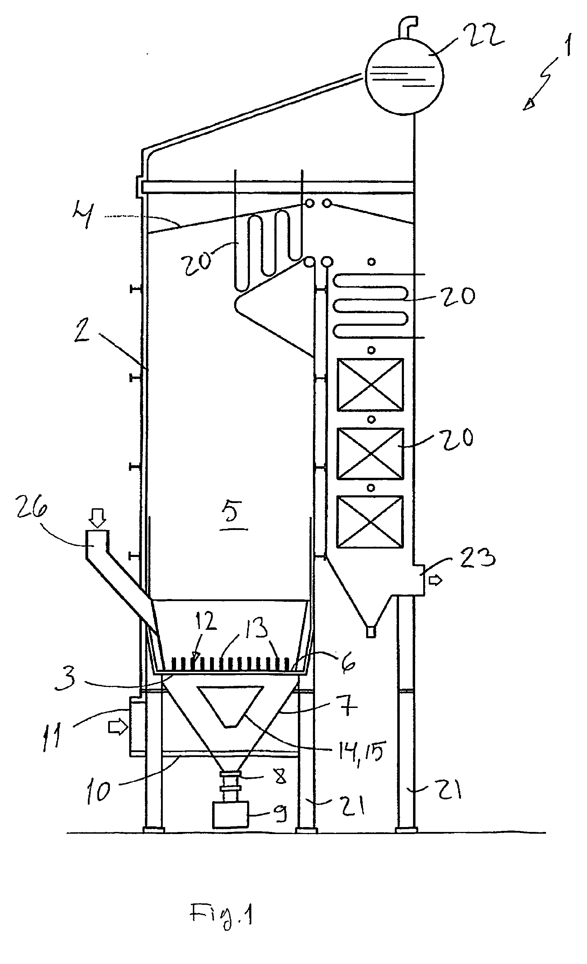

Figure 1 shows a bubbling fluidized bed boiler, i.e. a bubbling bed boiler 1 according to the invention. The boiler comprises a furnace 5 limited by walls 2, a grate 3 and a roof 4. Through the grate lead openings 6 from which material inside the furnace is guided below the grate into a steering funnel 7. Inside the steering funnel 7 bed material removed from the furnace and impurities among it are led further downwards. There is at the lower end of the steering funnel a damper 8 via which material is guided to a conveyor 9 and onwards to further processing.

Below the grate is arranged a windbox 10. The steering funnel 7 is mainly inside it. To the windbox 10 air needed for burning and fluidization of bed material is led from a connection 11. Air travels through the windbox 10 upwards via air nozzles 13 in a nozzle surface 12 formed onto the grate 3 to the lower part of the furnace 5.

Inside the steering funnel 7 are arranged guide plates 14 which form an inner funnel 15. A part of the material to be removed from the furnace 5 leads through the inner funnel 15. A part of the material flows between the inner funnel 15 and the steering funnel 7.

Figure 1 also shows other parts of a fluidized bed boiler, like different heat exchangers 20, beams 21 supporting the boiler, a steam drum 22, an outlet connection 23 of flue gas as well as an inlet assembly 26 for fuel and bed material which are not an aim of this invention as such and are not explained in further detail here.

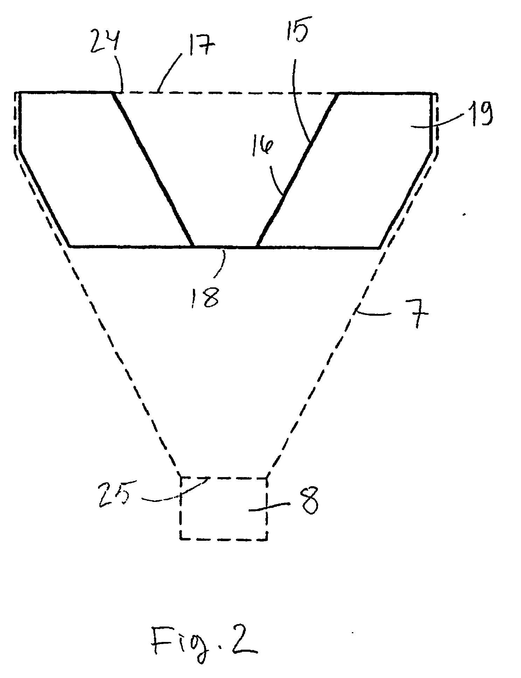

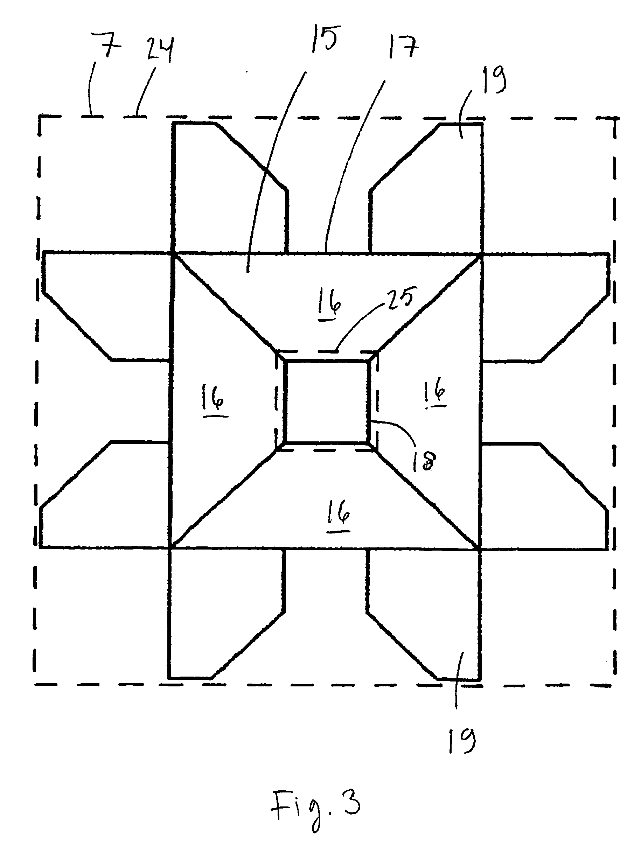

Figures 2 and 3 show with broken lines a steering funnel 7 according to the invention, inside which there is an inner funnel 15. There is an inlet opening 24 for material on the upper edge of a steering funnel 7, which opening is intended against the grate 3, and on the lower edge there is an outlet opening 25 for material, in which opening a damper 8 is attached.

A rectangular inner funnel 15 has inclined side walls 16, and thus the funnel is downwards tapering on its horizontal cross-section. The upper edge of the inner funnel 15 comprises an inlet opening 17 for material and the lower edge comprises an outlet opening 18 which is smaller than the inlet opening. The inlet opening 17 of the inner funnel is arranged approximately to the same height as the inlet opening 24 of the steering funnel. The outlet opening 18 of the inner funnel opens approximately to the middle of the height of the steering funnel 7, a little above the midpoint. The outlet opening 18 has a diameter somewhat smaller than the outlet opening 25. The funnel 15 throttles a material flow at the centre of the steering funnel, i.e. at the outlet opening 25, thus creating a condition for easier flowing of material between the inner funnel 15 and the outer funnel, i.e. the steering funnel 7. To the outer edges of the funnel 15 are attached extra guide plates 19. They throttle the flow of material outside the inner funnel 15 from the angles of the walls 16 towards the centre of the walls. From the Figure 3 it can be seen how a free path downwards for the material remains between the steering funnel 7 and the corners of the inner funnel 15.

Without the inner funnel 15 according to the invention, there would be a danger of forming a core flow for bed material at the centre of the steering funnel 7. Particularly, there would be a danger that at the corners of the steering funnel, i.e. also at the corners of the furnace, hardly any bed material could flow below the grate.

Even though guide plates arranged inside the steering funnel 7 are shown in the form of a funnel in the figures, it is obvious that also guide plates of other shapes can be arranged to guide the flows according to the invention.

The figures show only a few preferred embodiments according to the invention. Facts of secondary importance with regards to the main idea of the invention, facts known as such or evident for a person skilled in the art, such as power sources or support structures possibly required by the invention, are not separately shown in the figures. Fluidized bed technique is known as such, and the operation of boilers is not explained in further detail here. It is apparent to a person skilled in the art that the invention is not limited exclusively to the examples described above, but that the invention can vary within the scope of the claims presented below. The dependent claims present some possible embodiments of the invention, and they are not to be considered to restrict the scope of protection of the invention as such.

## Claims

1. A fluidized bed boiler (1) comprising
- a furnace (5) limited by walls (2), a grate (3) and a roof (4), as well as
- a steering funnel (7) arranged in connection with the furnace (5) below the grate (3) for leading bed material from the furnace downwards, the steering funnel (7) for bed material in a fluidized bed boiler (1) comprising
- a mainly downwards tapering horizontal cross-section,
- an upper edge comprising an inlet connection (24) for leading bed material from a furnace (5) inside the steering funnel (7),
- a lower edge comprising an outlet connection (25) for removing bed material from the steering funnel (7),
- a path for bed material arranged between the inlet and outlet connections,
whereby inside the steering funnel between its upper and lower edge are arranged guide plates (14, 15, 19) which are substantially divergent from a surface of the steering funnel for guiding a flow of bed material inside the steering funnel, **characterized in that** guide plates (14, 15, 19) are arranged inside the steering funnel (7) as a rectangular inner funnel (15) which has inclined side walls (16), thus the funnel being mainly downwards tapering on its horizontal cross-section to permit a flow of bed material on substantially whole cross-sectional area of the steering funnel (7) whereby
- the upper edge of the inner funnel (15) comprises an inlet opening (17) for material and the lower edge comprises an outlet opening (18),
- the inlet opening (17) of the inner funnel is arranged approximately to the same height as the inlet opening (24) of the steering funnel (15),
- the outlet opening (18) of the inner funnel opens approximately to the middle of the height of the steering funnel (7), a little above the midpoint,
- the inner funnel (15) is arranged to throttle a material flow at the centre of the steering funnel, i.e. at the outlet opening (25), thus creating a condition for easier flowing of material between the inner funnel (15) and the steering funnel (7),
- to the outer edges of the inner funnel (15) are attached extra guide plates (19), arranged to throttle the flow of material outside the inner funnel (15) from angles of the walls (16) towards the centre of the walls.

2. A fluidized bed according to claim 1, **characterized in that** the inner funnel (15) is arranged to the centre of the steering funnel (7).

3. A fluidized bed boiler according to any of the preceding claims 1 or 2, **characterized in that** at least one inner path of bed material is arranged to lead through the inner funnel (15) and at least one outer path of bed material is arranged to lead between the inner funnel (15) and the steering funnel (7).

4. A fluidized bed boiler according to any of the preceding claims 1 to 3, **characterized in that** the inner funnel (15) is at a distance from the steering funnel (7) mainly on all its sides.

5. A fluidized bed boiler according to any of the preceding claims 1 to 4, **characterized in that** a horizontal cross-section of the steering funnel (7) has corners, and between the steering funnel (7) and the inner funnel (15), in an area between the corners of the steering funnel are arranged extra guide plates (19) for intensifying the flow of bed material at the corners of the steering funnel.

6. A fluidized bed boiler according to claim 5, **characterized in that** the inner funnel (15) and the extra guide plates (19) are one and the same piece.

7. A fluidized bed boiler according to claim 1, **characterized in that** below the grate (3) there is arranged a windbox (10) for leading air through the grate to the furnace, whereby the steering funnel (7) is arranged mainly inside the windbox (10) of the fluidized bed boiler.

8. A method in a fluidized bed boiler (1), the method comprising:
- transferring material from a bottom of a furnace (5) of a fluidized bed boiler of a steering funnel (7) into a steering funnel below the furnace, through an upper edge (24) of the steering funnel (17),
- guiding material downwards inside the steering funnel (7),
- removing material from a lower edge (25) of the steering funnel,
- guiding a flow of material inside the steering funnel (7) by means of guide plates (14, 15, 19) being between its upper and lower edge, which guide plates are substantially divergent from a surface of the steering funnel (7), thus hindering development of a core flow inside the steering funnel (7),
**characterized in**
- arranging the guide plates (14, 15, 19) inside the steering funnel (7) as a rectangular inner funnel (15) having inclined side walls (16), thus the funnel being downwards tapering on its horizontal cross-section,
- guiding the flow of material downwards on substantially whole cross-sectional area of the steering funnel (7),
- arranging the upper edge of the inner funnel (15) to comprise an inlet opening (17) for material and the lower edge to comprise an outlet opening (18),
- arranging the inlet opening (17) of the inner funnel (15) approximately to the same height as the inlet opening of the steering funnel (15),
- arranging the outlet opening (18) of the inner funnel to open approximately to the middle of the height of the steering funnel (7), a little above the midpoint,
- throttling a material flow at the centre of the steering funnel, i.e. at the outlet opening (25) with the inner funnel (15) thus creating a condition for easier flowing of material between the inner funnel (15) and the the steering funnel (7),
- attaching extra guide plates (19) to the outer edges of the inner funnel (15), thereby throttling the flow of material outside the inner funnel (15) from angles of the walls (16) towards the centre of the walls.

9. A method according to claim 8, **characterized in that** a windbox (10) is arranged below the furnace, whereby the steering funnel (7) is arranged mainly inside the windbox (10) of a fluidized bed boiler, whereby the method comprises
- leading air to the windbox (10),
- cooling material inside the steering funnel (7) by means of the air and simultaneously heating the air with heat energy of the material in the steering funnel (7)
- leading heated air to the furnace (5).

10. A method according to any of the preceding claims 8 or 9, **characterized in that**
- a part of the material is led along an inner path, i.e. through the inner funnel (15),
- another part of the material is led along an outer path, i.e. between the inner funnel (15) and the steering funnel (7).

11. A method according to claim 10, **characterized in**
- leading material along the outer path substantially from all sides of the inner funnel (15).

12. A method according to any of the preceding claims 10 or 11, **characterized in that** a horizontal cross-section of the steering funnel (7) is mainly a rectangle, whereby the method comprises
- slowing down a flow of material by means of extra guide plates (19) arranged in an area between corners of the steering funnel (7), and thus
- intensifying a flow of material at the corners of the steering funnel (7).

## Patentansprüche

1. Wirbelschichtkessel (1), umfassend:
- eine Brennkammer (5), welche durch Wände (2), ein Gitter (3) und ein Dach (4) begrenzt ist, sowie
- einen steuernden Trichter (7), welcher in Verbindung mit der Brennkammer (5) unterhalb des Gitters (3) zum Führen von Bettmaterial von der Brennkammer nach unten angeordnet ist, wobei der steuernde Trichter (7) für Bettmaterial in einem Wirbelschichtkessel (1) umfasst
- einen im Wesentlichen nach unten sich verschmälernden horizontalen Querschnitt,
- einen oberen Rand, welcher eine Einlassverbindung (24) umfasst, zum Führen von Bettmaterial von einer Brennkammer (5) innerhalb des steuernden Trichters (7),
- einen unteren Rand, welcher eine Auslassverbindung (25) umfasst, zum Entfernen von Bettmaterial aus dem steuernden Trichter (7),
- einen Pfad für Bettmaterial, welches zwischen der Einlass- und Auslassverbindung angeordnet ist,
wobei innerhalb des steuernden Trichters zwischen seinem oberen und unteren Rand Führungsplatten (14, 15, 19) angeordnet sind, welche im Wesentlichen auseinandergehend von einer Fläche des steuernden Trichters zum Steuern eines Flusses von Bettmaterial innerhalb des steuernden Trichters angeordnet sind, **dadurch gekennzeichnet, dass** die Führungsplatten (14, 15, 19) innerhalb des steuernden Trichters (7) als ein rechteckiger innerer Trichter (15) angeordnet sind, welcher geneigte Seitenwände (16) aufweist, wodurch der Trichter im Wesentlichen sich nach unten verschmälernd in seinem horizontalen Querschnitt ist, um einen Fluss von Bettmaterial über einem im Wesentlichen gesamten Querschnittsbereich des steuernden Trichters (7) zu ermöglichen, wobei
- der obere Rand des inneren Trichters (15) eine Einlassöffnung (17) für Material umfasst und der untere Rand eine Auslassöffnung (18) umfasst,
- die Einlassöffnung (17) des inneren Trichters näherungsweise auf der gleichen Höhe wie die Einlassöffnung (24) des steuernden Trichters (15) angeordnet ist,
- die Auslassöffnung (18) des inneren Trichters sich näherungsweise zu der Mitte der Höhe des steuernden Trichters (7), etwas über dem Mittelpunkt, öffnet,
- der innere Trichter (15) ausgestaltet ist, einen Materialfluss in der Mitte des steuernden Trichters zu drosseln, d.h. bei der Auslassöffnung (25), wodurch ein Zustand für ein leichteres Fließen von Material zwischen dem inneren Trichter (15) und dem steuernden Trichter (7) erzeugt wird,
- an den äußeren Rändern des inneren Trichters (15) zusätzliche Führungsplatten (19) angeordnet sind, welche ausgestaltet sind, den Fluss von Material außerhalb des inneren Trichters (15) von Ecken der Wände (16) in Richtung der Mitte der Wände zu drosseln.

2. Wirbelschicht nach Anspruch 1, **dadurch gekennzeichnet, dass** der innere Trichter (15) zu der Mitte des steuernden Trichters (7) ausgerichtet ist.

3. Wirbelschichtkessel nach einem der vorhergehenden Ansprüche 1 oder 2, **dadurch gekennzeichnet, dass** mindestens ein innerer Pfad von Bettmaterial ausgestaltet ist, durch den inneren Trichter (15) zu führen, und mindestens ein äußerer Pfad von Bettmaterial ausgestaltet ist, zwischen dem inneren Trichter (15) und dem steuernden Trichter (7) zu verlaufen.

4. Wirbelschichtkessel nach einem der vorhergehenden Ansprüche 1 bis 3, **dadurch gekennzeichnet, dass** sich der innere Trichter (15) im Wesentlichen an all seinen Seiten in einem Abstand zu dem steuernden Trichter (7) befindet.

5. Wirbelschichtkessel nach einem der vorhergehenden Ansprüche 1 bis 4, **dadurch gekennzeichnet, dass** ein horizontaler Querschnitt des steuernden Trichters (7) Ecken aufweist und dass zwischen dem steuernden Trichter (7) und dem inneren Trichter (15) in einem Bereich zwischen den Ecken des steuernden Trichters zusätzliche Führungsplatten (19) zum Intensivieren des Flusses von Bettmaterial an den Ecken des steuernden Trichters angeordnet sind.

6. Wirbelschichtkessel nach Anspruch 5, **dadurch gekennzeichnet, dass** der innere Trichter (15) und die zusätzlichen Führungsplatten (19) ein und dasselbe Teil sind.

7. Wirbelschichtkessel nach Anspruch 1, **dadurch gekennzeichnet, dass** unterhalb des Gitters (3) ein Luftkasten (10) zum Führen von Luft durch das Gitter zu der Brennkammer angeordnet ist, wobei der steuernde Trichter (7) im Wesentlichen innerhalb des Luftkastens (10) des Wirbelschichtkessels angeordnet ist.

8. Verfahren in einem Wirbelschichtkessel (1), wobei das Verfahren umfasst:
- Übertragen von Material von einer Unterseite einer Brennkammer (5) eines Wirbelschichtkessels eines steuernden Trichters (7) in einen steuernden Trichter unterhalb der Brennkammer durch einen oberen Rand (24) des steuernden Trichters (17),
- Führen von Material innerhalb des steuernden Trichters (7) nach unten,
- Entfernen von Material von einem unteren Rand (25) des steuernden Trichters,
- Führen eines Flusses von Material innerhalb des steuernden Trichters (7) mittels Führungsplatten (14, 15, 19), welche sich zwischen seinem oberen und unteren Rand befinden, wobei die Führungsplatten im Wesentlichen von einer Fläche des steuernden Trichters (7) auseinanderlaufend sind, wodurch eine Entwicklung eines Kernflusses innerhalb des steuernden Trichters (7) erschwert wird,
**gekennzeichnet durch**
- Anordnen der Führungsplatten (14, 15, 19) innerhalb des steuernden Trichters (7) als ein rechteckiger innerer Trichter (15) mit geneigten Seitenwänden (16), wodurch sich der Trichter nach unten in seinem horizontalen Querschnitt verschmälert,
- Führen des Flusses von Material nach unten in im Wesentlichen einem gesamten Querschnittsbereich des steuernden Trichters (7),
- Anordnen des oberen Randes des inneren Trichters (15), um eine Einlassöffnung (17) für Material zu umfassen, und des unteren Rands, um eine Auslassöffnung (18) zu umfassen,
- Anordnen der Einlassöffnung (17) des inneren Trichters (15) näherungsweise auf derselben Höhe wie die Einlassöffnung des steuernden Trichters (15),
- Anordnen der Auslassöffnung (18) des inneren Trichters, um sich näherungsweise auf der Mitte der Höhe des steuernden Trichters (7), ein wenig über dem Mittelpunkt, zu öffnen,
- Drosseln eines Materialflusses in der Mitte des steuernden Trichters, d.h. an der Auslassöffnung (25), mit dem inneren Trichter (15), wodurch ein Zustand für ein einfacheres Fließen des Materials zwischen dem inneren Trichter (15) und dem steuernden Trichter (7) erzeugt wird,
- Anbringen von zusätzlichen Führungsplatten (19) an den äußeren Rändern des inneren Trichters (15), wodurch der Fluss von Material außerhalb des inneren Trichters (15) von Ecken der Wände (16) in Richtung der Mitte der Wände gedrosselt wird.

9. Verfahren nach Anspruch 8, **dadurch gekennzeichnet, dass** ein Luftkasten (10) unterhalb der Brennkammer angeordnet ist, wobei der steuernde Trichter (7) im Wesentlichen innerhalb des Luftkastens (10) eines Wirbelschichtkessels angeordnet ist, wobei das Verfahren umfasst
- Führen von Luft zu dem Luftkasten (10),
- Kühlen von Material innerhalb des steuernden Trichters (7) mittels der Luft und gleichzeitiges Erwärmen der Luft mit Heizenergie des Materials in dem steuernden Trichter (7),
- Führen der erwärmten Luft zu der Brennkammer (5).

10. Verfahren nach einem der vorhergehenden Ansprüche 8 oder 9, **dadurch gekennzeichnet, dass**
- ein Teil des Materials entlang einem inneren Pfad geleitet wird, d.h. durch den inneren Trichter (15),
- ein anderer Teil des Materials entlang eines äußeren Pfades geleitet wird, d.h. zwischen dem inneren Trichter (15) und dem steuernden Trichter (7).

11. Verfahren nach Anspruch 10, **gekennzeichnet durch**
- Führen von Material entlang dem äußeren Pfad im Wesentlichen von allen Seiten des inneren Trichters (15).

12. Verfahren nach einem der vorhergehenden Ansprüche 10 oder 11, **dadurch gekennzeichnet, dass** ein horizontaler Querschnitt des steuernden Trichters (7) im Wesentlichen ein Rechteck ist, wobei das Verfahren umfasst
- Verlangsamen eines Flusses von Material mittels zusätzlicher Führungsplatten (19), welche in einem Bereich zwischen Ecken des steuernden Zylinders (7) angeordnet sind, und somit
- Intensivieren eines Flusses von Material an den Ecken des steuernden Trichters (7).

## Revendications

1. Chaudière à lit fluidisé (1) comprenant :
- un foyer (5) limité par des parois (2), une grille (3) et un toit (4), de même que
- un entonnoir de guidage (7) agencé en connexion avec le foyer (5) au-dessous de la grille (3) pour conduire le matériau de lit à partir du foyer vers le bas, l'entonnoir de guidage (7) destiné au matériau de lit dans une chaudière à lit fluidisé (1) comportant
- une section transversale horizontale se rétrécissant vers le bas principalement,
- un bord supérieur comprenant un raccordement d'entrée (24) pour conduire le matériau de lit depuis un foyer (5) à l'intérieur de l'entonnoir de guidage (7),
- un bord inférieur comprenant un raccordement de sortie (25) permettant de retirer le matériau de lit de l'entonnoir de guidage (7),
- un chemin destiné au matériau de lit agencé entre les raccordements d'entrée et de sortie,
de sorte que, à l'intérieur de l'entonnoir de guidage, entre son bord supérieur et son bord inférieur, se trouvent agencées des plaques de guidage (14, 15, 19) qui sont essentiellement divergentes à partir d'une surface de l'entonnoir de guidage pour guider un écoulement de matériau de lit à l'intérieur de l'entonnoir de guidage, **caractérisée en ce que** les plaques de guidage (14, 15, 19) sont disposées à l'intérieur de l'entonnoir de guidage (7) sous la forme d'un entonnoir intérieur rectangulaire (15), lequel présente des parois latérales inclinées (16), l'entonnoir se rétrécissant ainsi principalement vers le bas sur sa section transversale horizontale afin de permettre un écoulement de matériau de lit sur sensiblement toute la surface de la section transversale de l'entonnoir de guidage (7), de ce fait
- le bord supérieur de l'entonnoir intérieur (15) comporte une ouverture d'entrée (17) pour le matériau et le bord inférieur comporte une ouverture de sortie (18),
- l'ouverture d'entrée (17) de l'entonnoir intérieur est disposée approximativement à la même hauteur que l'ouverture d'entrée (24) de l'entonnoir de guidage (15),
- l'ouverture de sortie (18) de l'entonnoir intérieur s'ouvre approximativement au milieu de la hauteur de l'entonnoir de guidage (7), un peu au-dessus du niveau central,
- l'entonnoir intérieur (15) est agencé afin de créer un étranglement pour l'écoulement du matériau au niveau du centre de l'entonnoir de guidage, c'est-à-dire au niveau de l'ouverture de sortie (25), créant ainsi une situation d'écoulement du matériau plus facile entre l'entonnoir intérieur (15) et l'entonnoir de guidage (7),
- aux bords extérieurs de l'entonnoir intérieur (15) sont fixées des plaques de guidage supplémentaires (19), agencées afin de créer un étranglement pour l'écoulement du matériau à l'extérieur de l'entonnoir intérieur (15) à partir des coins des parois (16) vers le centre des parois.

2. Lit fluidisé selon la revendication 1, **caractérisé en ce que** l'entonnoir intérieur (15) est agencé au centre de l'entonnoir de guidage (7).

3. Chaudière à lit fluidisé selon l'une quelconque des revendications précédentes 1 ou 2, **caractérisée en ce qu'**au moins un chemin intérieur du matériau de lit est agencé pour passer à travers l'entonnoir intérieur (15) et au moins un chemin extérieur de matériau de lit est agencé pour passer entre l'entonnoir intérieur (15) et l'entonnoir de guidage (7).

4. Chaudière à lit fluidisé selon l'une quelconque des revendications précédentes 1 à 3, **caractérisée en ce que** l'entonnoir intérieur (15) se trouve à une certaine distance de l'entonnoir de guidage (7), principalement sur tous ses côtés.

5. Chaudière à lit fluidisé selon l'une quelconque des revendications précédentes 1 à 4, **caractérisée en ce qu'**une coupe transversale horizontale de l'entonnoir de guidage (7) présente des angles, et **en ce que**, entre l'entonnoir de guidage (7) et l'entonnoir intérieur (15), dans une zone comprise entre les coins de l'entonnoir de guidage, sont agencées des plaques de guidage supplémentaires (19) en vue d'intensifier l'écoulement du matériau de lit au niveau des coins de l'entonnoir de guidage.

6. Chaudière à lit fluidisé selon la revendication 5, **caractérisée en ce que** l'entonnoir intérieur (15) et les plaques de guidage supplémentaires (19) sont une même et seule pièce.

7. Chaudière à lit fluidisé selon la revendication 1, **caractérisée en ce que**, au-dessous de la grille (3), est disposé un dispositif de ventilation (10) en vue de guider l'air à travers la grille vers le foyer, de sorte que l'entonnoir de guidage (7) est agencé principalement à l'intérieur du dispositif de ventilation (10) de la chaudière à lit fluidisé.

8. Procédé relatif à une chaudière à lit fluidisé (1), le procédé comprenant le fait de :
- transférer un matériau à partir d'une partie inférieure d'un foyer (5) d'une chaudière à lit fluidisé d'un entonnoir de guidage (7) dans un entonnoir de guidage situé au-dessous du foyer, à travers un bord supérieur (24) de l'entonnoir de guidage (17),
- guider le matériau vers le bas à l'intérieur de l'entonnoir de guidage (7),
- retirer le matériau à partir d'un bord inférieur (25) de l'entonnoir de guidage,
- guider un écoulement de matériau à l'intérieur de l'entonnoir de guidage (7) au moyen de plaques de guidage (14, 15, 19) se trouvant entre son bord supérieur et son bord inférieur, lesquelles plaques de guidage sont essentiellement divergentes à partir d'une surface de l'entonnoir de guidage (7), entravant ainsi le développement d'un écoulement central à l'intérieur de l'entonnoir de guidage (7),
**caractérisé par** le fait de :
- agencer les plaques de guidage (14, 15, 19) à l'intérieur de l'entonnoir de guidage sous la forme d'un entonnoir intérieur rectangulaire (15) présentant des parois latérales inclinées (16), l'entonnoir se rétrécissant ainsi vers le bas, sur sa section transversale horizontale,
- guider l'écoulement de matériau vers le bas essentiellement sur toute la surface de section transversale de l'entonnoir de guidage (7),
- agencer le bord supérieur de l'entonnoir intérieur (15) afin qu'il comporte une ouverture d'entrée (17) destinée au matériau et le bord inférieur afin qu'il comporte une ouverture de sortie (18),
- disposer l'ouverture d'entrée (17) de l'entonnoir intérieur (15) approximativement à la même hauteur que l'ouverture d'entrée de l'entonnoir de guidage (15),
- disposer l'ouverture de sortie (18) de l'entonnoir intérieur pour qu'elle s'ouvre approximativement au milieu de la hauteur de l'entonnoir de guidage (7), un peu au-dessus du niveau central,
- créer un étranglement pour accélérer un écoulement de matériau au niveau du centre de l'entonnoir de guidage, c'est-à-dire au niveau de l'ouverture de sortie (25) avec l'entonnoir intérieur (15), créant ainsi une situation permettant un écoulement de matériau plus facile entre l'entonnoir intérieur (15) et l'entonnoir de guidage (7),
- fixer des plaques de guidage supplémentaires (19) aux bords extérieurs de l'entonnoir intérieur (15), créant de ce fait un étranglement pour l'écoulement de matériau à l'extérieur de l'entonnoir intérieur (15) depuis les coins des parois (16) vers le centre des parois.

9. Procédé selon la revendication 8, **caractérisé en ce qu'**un dispositif de ventilation (10) est disposé au-dessous du foyer, de sorte que l'entonnoir de guidage (7) est agencé principalement à l'intérieur du dispositif de ventilation (10) d'une chaudière à lit fluidisé, le procédé comprenant, de ce fait, de :
- guider l'air vers le dispositif de ventilation (10),
- refroidir le matériau à l'intérieur de l'entonnoir de guidage (7) au moyen de l'air et chauffer, simultanément, l'air avec l'énergie thermique du matériau dans l'entonnoir de guidage (7),
- conduire l'air chauffé vers le foyer (5).

10. Procédé selon l'une quelconque des revendications précédentes 8 ou 9, **caractérisé en ce que** :
- une partie du matériau est guidée le long d'un chemin interne, c'est-à-dire à travers l'entonnoir intérieur (15),
- une autre partie du matériau est guidée le long d'un chemin extérieur, c'est-à-dire entre l'entonnoir intérieur (15) et l'entonnoir de guidage (7).

11. Procédé selon la revendication 10, **caractérisé par** le fait de :
- guider le matériau le long du chemin extérieur essentiellement à partir de tous les côtés de l'entonnoir intérieur (15).

12. Procédé selon l'une quelconque des revendications précédentes 10 ou 11, **caractérisé en ce qu'**une section transversale horizontale de l'entonnoir de guidage (7) représente principalement un rectangle, de sorte que le procédé comprend le fait de
- ralentir un écoulement de matériau au moyen des plaques de guidage supplémentaires (19) agencées dans une zone comprise entre les coins de l'entonnoir de guidage (7), et ainsi
- intensifier un écoulement de matériau au niveau des coins de l'entonnoir de guidage (7).
